# EUROPÄISCHE PATENTANMELDUNG

(11) **EP 2 953 420 A1**
(43) Veröffentlichungstag der Anmeldung: **09.12.2015**
(21) Anmeldenummer: 15169741.4
(22) Anmeldetag: 28.05.2015
(51) Int. Cl.: H05B 1/02, F24H 7/00, F24H 7/02, F24H 7/04, F24H 7/06, F24H 9/20, G05D 23/19

(54) **ELEKTROSPEICHERHEIZANLAGE**

(30) Priorität: 03.06.2014 DE 102014210469; 03.06.2014 DE 102014210463
(71) Anmelder: Glen Dimplex Deutschland GmbH, 95326 Kulmbach (DE)
(72) Erfinder: BECKSTEIN, Ewald, 95326 Kulmbach (DE); BAREUTHER, Helmut, 95497 Goldkronach (DE); OSTBOMK, Nicolas, 95326 Kulmbach (DE)
(74) Vertreter: FDST Patentanwälte

(57) **Zusammenfassung**

Eine Elektrospeicherheizanlage (2) umfasst einen Speicherkern (12) sowie elektrische Heizstäbe (14) zum Aufladen des Speicherkerns (12), wobei die Heizstäbe (14) in Gruppen (A,B,C) angeordnet sind. Die Beladung erfolgt mit Hilfe eines Ladereglers (16), der durch eine Reglerplatine gebildet ist, auf der mehrere Schaltelemente (22) integriert sind, über die die einzelnen Gruppen (A,B,C) unabhängig voneinander zuschaltbar sind. Zur Bestimmung eines Soll-Ladegrads (L_{S}) ist vorzugsweise oder alternativ zu der Anordnung der Gruppen (A,B,C) die Berücksichtigung von Wetterprognosedaten vorgesehen.

## Beschreibung

Die Erfindung betrifft eine Elektrospeicherheizanlage.

Elektrospeicherheizanlagen weisen üblicherweise einen Speicherkern auf, welcher mittels elektrischer Heizstäbe mit Wärme beladen wird. Die im Speicherkern gespeicherte Energie wird später bei Bedarf an einen zu beheizenden Raum abgegeben. Hierzu durchströmt Luft den Speicherkern, erwärmt sich und wird anschließend an den Raum abgegeben.

Derartige Speicherheizgeräte werden üblicherweise während der Heizperiode täglich wiederkehrend aufgeladen, d.h. mittels der elektrischen Heizstäbe wird Energie im Speicherkern deponiert. Je nach Wärmebedarf für den nächsten Heiztag ist dabei aus Energieeffienzgründen das Aufladen des Speicherheizgerätes bis zu einem definierten Soll-Ladegrad erforderlich und gewünscht. Der Ladegrad wird hierbei insbesondere durch die Temperatur des Speicherkerns bestimmt. Mit Hilfe eines sogenannten Ladereglers wird der Beladevorgang des Speicherkerns gesteuert. Der Speicherkern mit den Heizelementen sowie das Gebläse sind in einem gemeinsamen Gehäuse angeordnet und bilden eine Baueinheit, dem sogenannten Elektrospeicherheizgerät.

Für die Bestimmung des gewünschten Soll-Ladegrades geht heutzutage bei außentemperaturengesteuerten Systemen die gemessene gemittelte Außentemperatur des vergangenen Tages sowie eine aktuelle Außentemperatur ein. Diese Temperaturen können dabei unterschiedlich gewichtet werden, um den Soll-Ladegrad zu bestimmen.

Häufig führt dies jedoch zu einem zu hohen oder zu geringem Ladegrad. Bei einem zu hohen Ladegrad ist der Energieverbrauch höher als für die Raumbeheizung erforderlich wäre. Bei einem zu geringen Ladegrad reicht die gespeicherte Energie nicht aus, so dass unter Umständen am Tag elektrisch nachgeheizt werden muss, dies dann üblicherweise zu höheren (Tag-)Stromtarifen als in der Nacht.

Elektrische Speicherheizgeräte werden üblicherweise zu Schwachlastzeiten, also insbesondere nachts, aufgeladen. Hierfür ist der sogenannte Rundsteuerempfänger bekannt, mittels dem Energieversorgungsunternehmen die Aufladung einer Vielzahl von Elektrospeicherheizgeräten oder das Einschalten andere Verbraucher zentral steuern. Hierzu gibt es unterschiedliche Ladekonzepte, die darauf abzielen, dass die Beladung der Speicherheizgeräte auch zeitversetzt erfolgt, so dass eine möglichst optimale Auslastung des Versorgungsnetzes erreicht ist.

Der eigentliche Ladevorgang des Elektrospeicherheizgerätes wird dabei über den Laderegler gesteuert. Heutzutage sind Elektrospeicherheizgeräte an einem Dreiphasen-Anschluss angeschlossen. Der Soll-Ladegrad wird insbesondere in Abhängigkeit der Außentemperatur vorgegeben. Ist der Soll-Ladegrad unterschritten, so steuert der Laderegler ein Schaltelement an zum Aufladen des Speicherkerns. Dem Laderegler ist dabei üblicherweise ein Temperaturfühler zugeordnet, welcher die Temperatur des Speicherkerns als Maßstab für den aktuellen Ladegrad ermittelt. In Abhängigkeit des aktuellen Ladegrads steuert der Laderegler schließlich den Beladevorgang. Das Schaltelement ist dabei im Speicherheizgerät integriert und als ein gemeinsamer Thermoschalter für die drei Phasen des Netzes ausgebildet. Sobald ergänzend das Rundsteuersignal nach Art eines ersten Freigabesignals vorliegt, wird heutzutage ein sogenannter Heizungsschütz geschaltet, der z.B. unmittelbar in einem zentralen Sicherungskasten im Gebäude integriert ist und die Versorgung für das Speicherheizgerät freigibt.

Im Zuge der effizienten Ausnutzung insbesondere von regenerativen Energien werden zusehends neue Konzepte entwickelt. Insbesondere ist hierbei der Gedanke eines sogenannten "Smart-Grid" entwickelt worden, bei dem eine Vielzahl von Endverbrauchergeräten bedarfsweise zugeschaltet werden, wenn aktuelle regenerativ erzeugte Energie zur Verfügung steht.

Bisherige Elektrospeicherheizgeräte sind für die Integration in derartige Smart-Grid-Systeme nur bedingt geeignet.

Darüber hinaus besteht unter anderem auch der Wunsch nach einem möglichst hohen Eigenverbrauch von selbst erzeugter regenerativer Energie, beispielsweise von Photovoltaik-Anlagen, um gerade zu Spitzenzeiten das Versorgungsnetz nicht mit einem Übermaß an regenerativ erzeugter Energie zu belasten. Der Eigenverbrauch von selbst erzeugter Photovoltaik-Leistung wird auch wirtschaftlich zunehmend vorteilhafter.

Aus der WO 2013/144169 A2 ist eine Elektrospeicherheizanlage zu entnehmen, bei der eine bewusste Überhitzung des Speicherkerns vorgesehen ist, um überschüssige Energie eines Versorgungsnetzes speichern zu können.

Ausgehend hiervon liegt der Erfindung die Aufgabe zugrunde, eine verbesserte Ladereglung bei einer Elektrospeicherheizeinrichtung zu ermöglichen, insbesondere auch eine verbesserte Ausnutzung von regenerativer Energie, die über das Versorgungsnetz oder eigenerzeugt bereitgestellt wird.

Die Aufgabe wird gemäß der Erfindung gelöst durch eine Elektrospeicherheizanlage mit den Merkmalen des Anspruchs 1.

Die Elektrospeicherheizanlage weist einen in einem Gehäuse angeordneten Speicherkern mit elektrischen Heizstäben zum Aufladen des Speicherkerns auf. Die Heizstäbe sind dabei in Gruppen angeordnet. Weiterhin ist ein Laderegler zum Aufladen des Speicherkerns vorgesehen, wobei der Laderegler durch eine Reglerplatine gebildet ist. Im Gehäuse sind dabei zumindest der Speicherkern, die Heizstäbe sowie der Laderegler angeordnet. Diese Elemente bilden eine nachfolgend auch als Elektrospeicherheizgerät oder einfach Heizgerät bezeichnete Baugruppe. Weiterhin umfasst die Elektrospeicherheizanlage eine Berechnungseinheit, die für die Vorgabe eines Soll-Ladegrads für den Speicherkern ausgebildet ist und den Soll-Ladegrad im Betrieb dem Laderegler auch zur Verfügung stellt. Für jede Gruppe der Heizstäbe ist weiterhin jeweils ein Schaltelement zum Freischalten eines Ladestroms vorgesehen, derart dass die einzelnen Gruppen unabhängig voneinander zuschaltbar sind. Die Schaltelemente sind im Hinblick auf eine möglichst kompakte Ausgestaltung dabei vorzugsweise auf der Reglerplatine integriert.

Im Unterschied zu bisherigen Speicherheizgeräten ist daher keine Zuschaltung von allen Heizstäben gleichzeitig erforderlich. Vielmehr können die einzelnen Heizstäbe in unterschiedlichen Laststufen zugeschaltet werden. Hierdurch wird der Besonderheit Rechnung getragen, dass mitunter nur eine begrenzte Menge an regenerativ erzeugter Energie zur Verfügung steht, so dass es von Vorteil ist, die Leistungsaufnahme des Speicherheizgeräts zu begrenzen. Dies ist insbesondere von Bedeutung bei Verwendung von eigenproduziertem Strom aus einer regenerativen Energiequelle, um den Eigenverbrauch zu steigern. Insbesondere in diesem Fall wird die Leistungsaufnahme vorzugsweise auf die aktuell maximal erzeugte regenerative Leistung durch geeignete Wahl der zugeschalteten Gruppen begrenzt. Allgemein wird daher beim Betrieb - speziell wenn keine ausreichende regenerativ erzeugte Leistung zur Verfügung steht - die Leistungsaufnahme begrenzt auf einen Wert unterhalb der Heizleistung der gesamten Heizelemente.

Die Schaltelemente sind dabei bevorzugt auf einer Reglerplatine angeordnet, durch die der Laderegler insgesamt gebildet ist. Auf dieser Reglerplatine sind daher alle für den Regelvorgang des Beladens des Speicherkerns erforderlichen Komponenten angeordnet. Diese Platine ist üblicherweise mit Klemmleisten verbunden und beispielsweise in diese eingesteckt. Dabei sind typischerweise zwei unterschiedliche Typen von Klemmleisten vorgesehen, nämlich eine LeistungsKlemmleiste und eine Steuerungs-Klemmleiste. Über die Steuerungs-Klemmleiste werden üblicherweise Steuerungssignale drahtgebunden angelegt, beispielsweise ein Steuerungssignal zur Vorgabe des Soll-Ladegrades, welcher insbesondere durch die Höhe eines angelegten Spannungswertes vorgegeben wird. Über die Leistungs-Klemmleiste werden Leistungsleitungen, also Phase, Nullleiter sowie Erdpotenzial angeschlossen. Beide Klemmleisten sind dabei über die Reglerplatine angebunden. Über die Reglerplatine erfolgt die Steuerung und Regelung sowie Verknüpfung und Freischaltung von einzelnen Ausgängen an den Klemmleisten. Die Leistungs-Klemmleiste weist hierbei Phasenausgänge auf, an denen die Heizstäbe angeschlossen sind. Diese werden über die Reglerplatine bei Vorliegen von entsprechenden Freigabesignalen mittels der Schaltelemente freigeschaltet.

Zur Bestimmung des Soll-Ladegrads wird insbesondere auf herkömmliche, an sich bekannte Rechen-Algorithmen zurückgegriffen. Heutzutage ermitteln diese Algorithmen in Abhängigkeit von historischen Daten eines Außentemperaturfühlers ggf. in Kombination mit einer aktuell vom Außentemperaturfühler gemessenen temperatur den Soll-Ladegrad.

Zweckdienlicherweise handelt es sich bei den Schaltelementen um Magnetrelais. Diese sind also insbesondere auf der Platine angebracht. Über ein jeweiliges Schaltrelais wird dabei jeweils vorzugsweise genau eine Phase bei einem mehrphasigen Netz freigeschaltet. Alternativ kann auch das Speicherheizgerät nur an einem einphasigen Netz angeschlossen sein. In diesem Fall wird die eine Phase über die verschiedenen Schaltelemente auf die verschiedenen Gruppen von Heizstäben durchgeschaltet.

Alternativ handelt es sich bei den Schaltelementen um elektronische Leistungsschalter, beispielsweise Leistungstriacs etc. Vorzugsweise werden jedoch Magnetrelais eingesetzt. Aufgrund der Integration der Schaltelemente auf der Reglerplatine und deren Integration innerhalb des Gehäuses sind die Schaltelemente aufgrund der Nähe zum Speicherkern einer hohen Temperaturbeanspruchung ausgesetzt. Die Magnetrelais sind hierfür ausreichend robust.

Um eine gleichmäßige Beladung des Speicherkerns zu erzielen, ist zweckdienlicherweise eine Ansteuerlogik, insbesondere eine Zeitsteuerung für eine zeitversetzte Zu- und Abschaltung der Heizstab-Gruppen ausgebildet. So werden die einzelnen Heizstab-Gruppen abwechselnd beispielsweise alternierend für ein definiertes Zeitfenster, beispielsweise von 20 Minuten, geschaltet, so dass der Speicherkern gleichmäßig beladen wird. Alternativ oder ergänzend hierzu ist ein elektronischer Leistungsschalter, insbesondere ein Triac, vorgesehen, über den die bereitgestellte Leistung auf die verschiedenen Heizstab-Gruppen aufgeteilt wird. In beiden Fällen erfolgt eine (ggf. zeitliche) Aufteilung der Leistung auf die verschiedenen Heizstab-Gruppen insbesondere dann, wenn die zur Verfügung stehende Leistung kleiner der Gesamtheizleistung der Heizelemente ist.

In zweckdienlicher Weiterbildung ist der Laderegler mit einem innerhalb des Gehäuses angeordneten Kommunikationsmodul verbunden, über das im Betrieb eine vorzugsweise bidirektionale Kommunikation mit einer Zentraleinheit erfolgt.

Bei der Zentraleinheit handelt es sich vorzugsweise um eine intelligente Steuereinheit im Rahmen eines sogenannten Smart-Home-Energiemanagementsystems.

Die Zentraleinheit ist hierzu wahlweise oder in Kombination
- mit dem Internet verbunden, beispielsweise zum Empfang von Wetterprognosedaten,
- mit einem Energieversorger verbunden, beispielsweise ebenfalls über das Internet und insbesondere bidirektional,
- oder erhält Temperatursignale von Temperaturfühlern.

Über eine Verbindung mit dem Internet werden gemäß einer ersten bevorzugten Ausführungsvariante Wetterprognosedaten, beispielsweise von einem Wetterdienst abgerufen, welche dann in die Bestimmung des Soll-Ladegrades einfließen. Die Kommunikationsverbindung mit dem Energieversorger, insbesondere über das Internet, erlaubt einen Austausch von Informationen, beispielsweise über eine Stromverfügbarkeit, z.B. aufgrund von unterschiedlicher Netzauslastung bzw. unterschiedlichem Angebot von regenerativ erzeugter Energie. Weiterhin können aber auch umgekehrt Informationen über die aktuelle Speicherkapazität oder den aktuellen Speicherbedarf der Elektrospeicherheizanlage an den Energieversorger übermittelt werden. Der Empfang von Temperatursignalen beispielsweise von einem Außentemperaturfühler, einem Raumtemperaturfühler, einem Kerntemperaturfühler des Speicherkerns oder auch von einem in der Zentraleinheit integrierten Temperaturfühler versetzt in besonders vorteilhafter Weise die Zentraleinheit in die Lage, geeignete Steuersignale, insbesondere einen aktuellen Soll-Ladegrad, an den Laderegler zu übermitteln.

Die Zentraleinheit dient daher in bevorzugter Ausgestaltung insbesondere zur Ermittlung und auch Vorgabe des Soll-Ladegrads an den Laderegler. Die Zentraleinheit ist daher insgesamt zugleich als die Berechnungseinheit ausgebildet bzw. umfasst diese, welche den Soll-Ladegrad bestimmt.

Zweckdienlicherweise ist der Laderegler über eine vorzugsweise serielle Kommunikationsschnittstelle mit dem Kommunikationsmodul verbunden. Der Laderegler ist daher über diese Schnittstelle in einfacher Weise mit dem Kommunikationsmodul verbindbar, so dass der Laderegler mit der Zentraleinheit kommunizieren kann.

Über das Kommunikationsmodul erhält dabei der Laderegler zweckdienlicherweise Informationen, speziell Vorgaben für einen Soll-Ladegrad für den Speicherkern. Diese Informationen erhält er von der Zentraleinheit. Diese ermittelt den Soll-Ladegrad insbesondere unter Berücksichtigung der aktuellen Außentemperatur.

Das Kommunikationsmodul steht alternativ über Funk oder über ein Trägerfrequenzsystem mit der Zentraleinheit in Verbindung. Unter Trägerfrequenzsystem wird hierbei ein System verstanden, bei dem ein Datensignal auf die Netzfrequenz des Hausnetzes aufmoduliert ist. Derartige Systeme sind unter dem Begriff "Power Line Communication" (PLC) bekannt. Für die Funkverbindung werden bekannte Standards, beispielsweise "ZigBee", "Z-Wafe", "Enocean" usw. verwendet. Bei dem Kommunikationsmodul handelt es sich dabei insbesondere um ein steckbares Interface oder eine steckbare Platine, so dass - je nach Kommunikationssystem (Funk/PLC) - eine geeignete Steckplatine an den Laderegler anschließbar ist.

Über das Kommunikationsmodul werden im Betrieb vorzugsweise Informationen übermittelt, insbesondere den Ladegrad betreffend. Hierzu wird beispielsweise ein Temperatursignal eines Kerntemperaturfühlers übermittelt. Dies erfolgt wahlweise an die Zentraleinheit oder auch an den Energieversorger. Und zwar insbesondere auf Anfrage dieser Teilnehmer. Den Ladegrad betreffende Informationen, die z.B. an den Energieversorger übermittelt werden sind beispielsweise der aktuelle Rest-Ladegrad, eventuell der Soll-Ladegrad, der an den Energieversorger weitergegeben wird oder insbesondere ein Leistungs- und Energiebedarf zum Laden bis zum Soll-Ladegrad.

Zweckdienlicherweise erhält die Zentraleinheit bzw. zumindest mittelbar der Laderegler insbesondere vom Energieversorger ein erstes Freigabesignal, über das der Ladevorgang initiiert wird. Die Bereitstellung dieses Signals erfolgt dabei wahlweise über einen Rundsteuerempfänger und/oder über das Internet. Dieses ist beispielsweise über die Zentraleinheit angeschlossen, so dass die Zentraleinheit über das Internet das erste Freigabesignal erhält.

Weiterhin gibt die Zentraleinheit ein zweites Freigabesignal an den Laderegler, welches insbesondere auch den Soll-Ladegrad vorgibt. Insbesondere wenn beide Signale vorliegen, also das erste Freigabesignal sowie das zweite Freigabesignal (Soll-Ladegrad), erfolgt der Ladevorgang.

Zweckdienlicherweise erfolgt der Ladevorgang gemäß einer sogenannten Vorwärtsregelung. Bei dieser wird ab dem Zeitpunkt der Freigabe z.B. nach Erhalt des ersten Freigabesignals und Vorliegen eines Ladebedarfs (zweites Freigabesignal, Soll-Ladegrad-Vorgabe) der Ladevorgang durchgeführt, bis der Soll-Ladegrad erreicht ist. Dadurch wird überschüssige regenerativ erzeugte Energie effizient ausgenutzt. Zweckdienlicherweise wird ausschließlich diese Vorwärtsregelung eingesetzt. Dies erfolgt insbesondere in den Fällen, in denen regenerativ erzeugte Energie verwendet wird. Speziell im Fall einer lokalen Stromerzeugungsanlage der Wohneinheit, wie z.B. eine beispielsweise auf dem Dach der Wohneinheit installierten Photovoltaikanlage.

Insgesamt zeichnet sich Ladereglung der Elektrospeicherheizanlage durch folgende Konzepte aus, die für sich jeweils unabhängig voneinander als schutzfähig angesehen werden:
1) Anordnung von mehreren Schaltelementen, insbesondere Magnetrelais und deren Integration auf der Regelplatine,
2) Ausbildung des Kommunikationsmoduls und Verbindung über eine (serielle) Schnittstelle mit dem Laderegler,
3) die Ansteuerung von Zusatzkomponenten über die Zentraleinheit über das Kommunikationsmodul (wie nachfolgend noch erläutert), sowie
4) das ausschließliche Prinzip der Vorwärtssteuerung.

Ein weiterer als eigenständig angesehener Aspekt betrifft das Problem der Bestimmung des Soll-Ladegrades. Erfindungsgemäß ist zur Lösung dieses Problems eine Elektrospeicherheizanlage mit den Merkmalen des Anspruchs 8 vorgesehen.

Diese Elektrospeicherheizanlage ist dabei derart ausgebildet, dass ein Soll-Ladegrad für das Speicherheizgerät für einen kommenden Heiztag ermittelt wird, indem eine Wetterprognose mit prognostizierten Wetterdaten für den kommenden Heiztag berücksichtigt wird.

Durch die Ausnutzung von prognostizierten Wetterdaten wird die Möglichkeit geschaffen, den Soll-Ladegrad besser an den tatsächlichen Wärmebedarf für den folgenden Heiztag anzupassen, wodurch insgesamt eine effizientere Ausnutzung der elektrischen Energie erreicht wird.

In zweckdienlicher Weise wird auf die Auswertung von historischen Daten, beispielsweise des Vortages vollständig verzichtet und es werden nur zukünftige und ggf. aktuelle Wetterdaten herangezogen.

Vorzugsweise ist die Elektrospeicherheizanlage, insbesondere die Zentraleinheit dabei zumindest temporär mit einem Dienstleister, der Wetterdaten bereitstellt, einem sogenannten Wetterdienst oder auch mit einer Wetterstation verbindbar, um die Wetterprognose beispielsweise für die kommenden 24h oder für den kommenden Heiztag abzurufen.

Zweckdienlicherweise werden von der Zentraleinheit dabei zeitaufgelöste Prognose-Wetterdaten für die Ermittlung des Soll-Ladegrads herangezogen. Insbesondere werden stündliche Prognose-Wetterdaten herangezogen, d.h. für zukünftige ein- oder mehrstunden- Zeiträume werden Prognose -Wetterdaten bereitgestellt. Durch die zeitaufgelöste Berücksichtigung wird eine bessere Genauigkeit bei der Ermittlung des Soll-Ladegrads erreicht, da der Verlauf der Wetterdaten entscheidend auch für den Wärmebedarf am Folgetag ist. So kann anhand des Verlaufs festgestellt werden, zu welchen Uhrzeiten beispielsweise welche Temperaturen herrschen und aus diesen Angaben wird in einer Ausführungsvariante der Soll-Ladegrad abgeleitet.

In zweckdienlicher Weiterbildung wird aus den prognostizierten Wetterdaten zumindest ein oder es werden auch mehrere Mittelwerte gebildet, welche dann zur Ermittlung des Soll-Ladegrads herangezogen werden. Bei diesen Mittelwerten kann es sich grundsätzlich um Tages-Werte oder auch Halbtages-Werte, mehrere Stunden-Werte oder auch Stunden-Werte etc. handeln.

Vorzugsweise erfolgt dabei eine fortlaufende Bestimmung des Soll-Ladegrades. Dieser wird also dauernd, z.B. in periodischen Intervallen, beispielsweise alle 30 Minuten oder stündlich, also vielfach an einem Tag, bestimmt und insbesondere auch an den Laderegler übermittelt. Insbesondere wird ein Mittelwert gebildet aus den prognostizierten Daten, speziell durch eine gleitende Mittelwertbildung.

Dabei werden vorzugsweise Prognosedaten für ein vordefiniertes Zeitfenster, insbesondere die nächsten 24 oder 48 Stunden verarbeitet und aus diesen wird vorzugsweise der Mittelwert gebildet.

In zweckdienlicher Weiterbildung werden neben den prognostizierten Wetterdaten auch aktuelle Wetterdaten berücksichtigt. Vorzugsweise werden ausschließlich prognostizierte sowie aktuelle Wetterdaten und keine historischen Wetterdaten für die Ermittlung des Soll-Ladegrads berücksichtigt. Dabei fließen die prognostizierten Wetterdaten sowie die aktuellen Wetterdaten mit einer vorgegebenen Gewichtung in die Ermittlung des Soll-Ladegrads ein. Beispielsweise werden die prognostizierten Wetterdaten mit 35% bis 100% gewichtet. Bei den prognostizierten Wetterdaten handelt es sich insbesondere um den zuvor beschriebenen Mittelwert. Sowohl bei den prognostizierten als auch bei den aktuellen Wetterdaten handelt es sich jeweils um Wetterdaten, die zumindest für die Region, in der sich die elektrische Heizvorrichtung befindet, gültig sind.

In zweckdienlicher Ausbildung werden auch lokal gemessene aktuelle Wetterdaten, speziell am Aufstellort des Speicherheizgeräts, also an der jeweiligen Wohneinheit (Gebäude), berücksichtigt. Unter lokale Wetterdaten werden hierbei die Wetterdaten in der Umgebung des Speicherheizgerätes außerhalb des jeweiligen Gebäudes verstanden. Insbesondere werden z.B. die aktuellen Temperaturwerte eines Außentemperaturfühlers mit herangezogen. Hierdurch ist insbesondere auch eine genauere ortsspezifische Berücksichtigung der aktuellen Gegebenheiten erreicht.

Durch die Berücksichtigung der aktuellen Wetterdaten wird allgemein das aktuelle Wetter für die Ermittlung des Soll-Ladegrads berücksichtigt. Insbesondere im Falle von starken Wetterwechseln kann hieraus eine zusätzliche sinnvolle Information abgeleitet werden, die dann in den Soll-Ladegrad einfließt. Insbesondere wird hierbei die Differenz zwischen den aktuellen und den prognostizierten Wetterdaten berücksichtigt.

Für die Ermittlung des Soll-Ladegrads wird vorzugsweise in erster Linie eine prognostizierte Außentemperatur herangezogen. Ergänzend werden in bevorzugten Ausgestaltungen alternativ oder in Kombination Informationen über einen prognostizierten Sonnenschein sowie über eine prognostizierte Windgeschwindigkeit berücksichtigt. Dadurch wird also die Datenbasis für die Ermittlung des Soll-Ladegrads erweitert. Sonnenschein und Windgeschwindigkeiten sind dabei entscheidende Kenngrößen für den Wärmebedarf. Während bei Sonnenschein der Wärmebedarf grundsätzlich sinkt, nimmt er bei hohen Windgeschwindigkeiten typischerweise zu, so dass diese zusätzlichen Kennwerte - bei gleicher prognostizierter Außentemperatur - zu deutlich unterschiedlichen Soll-Ladegraden führen können. Berücksichtigt werden hierbei insbesondere auch Dauer, Intensität und zeitliche Verteilung des Sonnenscheins bzw. der Windgeschwindigkeit.

In besonders vorteilhafter Weiterbildung ist vorgesehen, dass die prognostizierten Wetterdaten zur Ermittlung des Soll-Ladegrads um eine ortsspezifische Korrektur für den Aufstellort des Speicherheizgeräts korrigiert werden. Dies beruht auf der Überlegung, dass die prognostizierten Wetterdaten regelmäßig von den tatsächlichen Wetterdaten am Aufstellort, also in unmittelbarer Umgebung des Gebäudes, in dem das Speicherheizgerät angeordnet ist, abweichen können. Dies ist beispielsweise durch eine spezielle Lage des Gebäudes oder auch seine Ausrichtung bedingt. So kann lokal im Bereich der Umgebung des Gebäudes ein anderes Mikroklima herrschen als von der Wetterprognose prognostiziert. Durch die Berücksichtigung der ortsspezifischen Korrektur wird die Genauigkeit für die Bestimmung des Soll-Ladegrads verbessert.

Für diese ortsspezifische Korrektur wird wahlweise insbesondere eine aktuelle Wetterinformation berücksichtigt, die beispielsweise lokal für den Aufstellort vorliegt. Insbesondere wird direkt ein Messwert eines Außentemperaturfühlers ausgewertet.

In besonders zweckdienlicher Ausgestaltung werden darüber hinaus systematische lokale Abweichungen berücksichtigt und/oder ein selbstlernendes System verwendet, welches insbesondere auf Grundlage von historischen Korrekturen zwischen den prognostizierten Wetterdaten und den tatsächlich gemessenen Wetterdaten eine Korrekturregel erstellt. Weiterhin wird beispielsweise für die lokale Korrektur ein Vergleich zwischen den von einem Wetterdienst übermittelten lokalen Wetterdaten mit den vor Ort unmittelbar beispielsweise an einer Messstation (Außentemperaturfühler) gemessenen Wetterdaten verglichen und hieraus eine Korrektur abgeleitet.

Insbesondere werden systematische lokale Abweichungen von prognostizierten Wetterdaten berücksichtigt. Wie bereits erwähnt, kann sich das Mikroklima von dem prognostizierten Klima unterscheiden. Hierbei handelt es sich häufig um einen systematischen Unterschied, welcher beispielsweise durch die Lage bedingt ist, die grundsätzlich zu anderen Temperaturen/anderen Sonnenscheindauern etc. führt.

Im Hinblick auf das selbstlernende System werden zu Beginn der Installation des Speicherheizgerätes zunächst Basisdaten zur Verfügung gestellt oder die Daten der Wetterprognose verwendet.

Vorzugsweise werden die prognostizierten Wetterdaten und/oder die daraus abgeleiteten Daten sowie der abgeleitete Soll-Ladegrad abgespeichert und mit den tatsächlichen Messdaten am Heiztag verglichen und/oder es wird der Soll-Ladegrad im Hinblick auf den nach dem Heiztag verbleibenden Rest-Ladegrad abgeglichen. Aus diesem Vergleich wird schließlich mit Hilfe eines geeigneten Algorithmus die Korrektur für zukünftige Berechnungen selbstlernend bestimmt. Bei der Ermittlung der gemessenen Vergleichswetterdaten wird dabei vorzugsweise auf Messdaten beispielsweise eines Außentemperaturfühlers oder auch eines Windmessers etc. zurückgegriffen, so dass ein direkter Abgleich der prognostizierten Wetterdaten mit den lokal gemessenen Wetterdaten ermöglicht ist.

Im Falle der Berücksichtigung von Informationen, die den Ladegrad betreffen wird beispielsweise der Rest-Ladegrad am Ende des Heiztages ausgewertet. Ist dieser systematisch zu hoch, so wird dies im Hinblick auf eine Korrektur hin zu geringeren Soll-Ladegraden herangezogen. Ist der Rest-Ladegrad umgekehrt systematisch zu niedrig bzw. ist der Speicherkern vollständig entleert, so führt dies zu einer Korrektur hin zu höheren Soll-Ladegraden. Hierdurch wird insbesondere auch ein spezifisches Nutzerverhalten berücksichtigt.

Im Hinblick auf eine effizientere Auslastung des Versorgungsnetzes ist zweckdienlicherweise weiterhin ein Kommunikationsmodul angeordnet, welches zur Übermittlung einer den Ladegrad des Speicherheizgeräts betreffende Information an den Energieversorger ausgebildet ist. Bei dieser Information handelt es sich vorzugsweise um den aktuellen Ladegrad, den ermittelten Soll-Ladegrad und/oder auch einen ermittelten Energiebedarf. Insgesamt wird der Energieversorger dadurch mit der Information versorgt, welcher Energiebedarf lokal vorliegt. Der Energieversorger kann dies in seinen Planungen zum Beladen des Energiespeichers berücksichtigen. Ein sogenanntes Lastmanagement und damit die Netzbalancierung des Energieversorgers kann daher besser optimiert werden.

Abhängig von der Netzlast und dem Eintrag regenerativer Energie kann der Energieversorger für jeden Tag ein passendes Lademodell generieren und die Ladezeiten beliebig auf den Tag verteilen. Damit wird eine optimierte Netzauslastung erreicht. Die von dem Energieversorger übermittelten Zeitfenster werden in der Zentraleinheit gespeichert und in Abhängigkeit des Ladegrads einzelner Elektrospeicherheizgeräte an den jeweiligen Laderegler übermittelt.

Zusammenfassend zeichnet sich daher die Bestimmung des Soll-Ladegrads durch die Ausnutzung einer Wetterprognose für den kommenden Heiztag, durch die Berücksichtigung von zusätzlichen physikalischen Wetterdaten neben der Außentemperatur, durch die Optimierung des Soll-Ladegrads durch Berücksichtigung einer ortsspezifischen Korrektur sowie durch eine Kommunikation mit dem Energieversorger aus. In Summe führt dies zu einer deutlich effizienteren Ausnutzung von Energie.

Die Berechnungseinheit und damit der Algorithmus zur Bestimmung des Soll-Ladegrads ist beispielsweise unmittelbar in einem Speicherheizgerät, dort insbesondere als Teil des Ladereglers oder auch in der Zentraleinheit außerhalb des Speicherheizgeräts integriert.

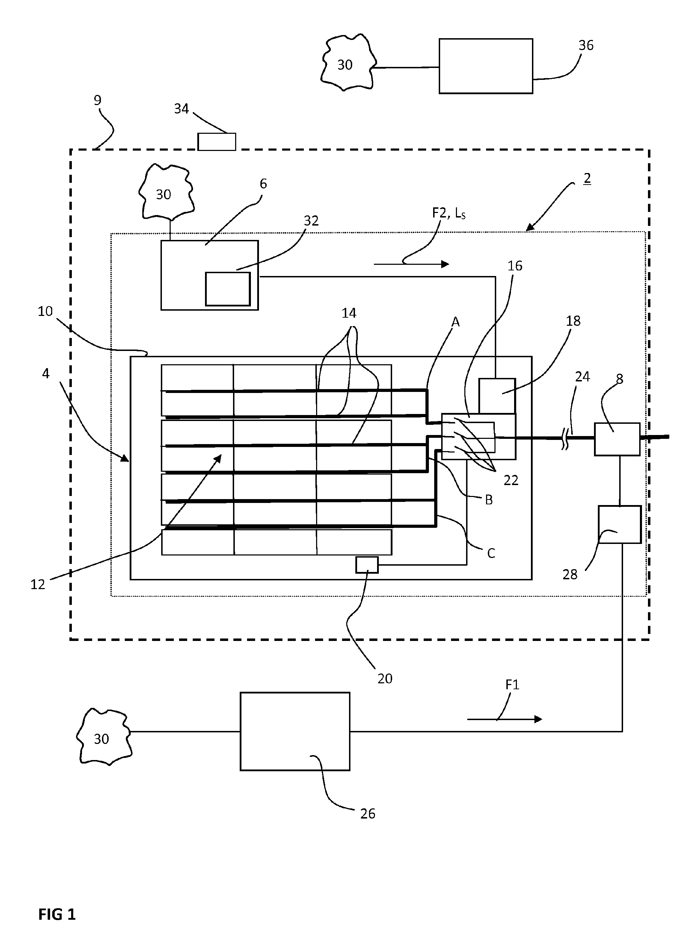

Ein Ausführungsbeispiel wird nachfolgend anhand der einzigen Figur näher erläutert.

Die einzige Figur zeigt allgemein ein System mit einer Elektrospeicherheizanlage 2, welches für die effiziente Ausnutzung von Energie, insbesondere von regenerativ erzeugter Energie sowie für eine möglichst gute Bestimmung eines Soll-Ladegrades Lₛ ausgebildet ist.

Die Elektrospeicherheizanlage 2 umfasst hierbei zumindest ein Speicherheizgerät 4 sowie eine außerhalb des Speicherheizgeräts 4, aber üblicherweise innerhalb einer gestrichelt dargestellten Wohneinheit, beispielsweise ein Ein- oder Mehrfamilienhaus, angeordnete Zentraleinheit 6. Über die Zentraleinheit 6 werden vorzugsweise mehrere Speicherheizgeräte 4 individuell angesteuert. Nachfolgend wird beispielhaft lediglich die Kommunikation und Ansteuerung mit einem Speicherheizgerät 4 beschrieben. Bei Bedarf umfasst die Elektrospeicherheizanlage noch einen sogenannten Heizschütz 8. Die Elektrospeicherheizanlage 2, der Heizschütz 8 und die Zentraleinheit 6 sind dabei innerhalb eines Gebäudes 9 angeordnet.

Das eigentliche Speicherheizgerät 4 ist als eine Baueinheit ausgebildet, welche ein Gehäuse 10 aufweist, in dem ein Speicherkern 12 sowie mehrere elektrische Heizstäbe 14 angeordnet sind. Die Heizstäbe 14 sind dabei in drei Gruppen A,B,C angeordnet. Innerhalb des Speicherheizgeräts 4 ist weiterhin ein Laderegler 16 angeordnet, welcher durch eine Reglerplatine mit darauf angebrachten elektrischen/elektronischen Bauelementen gebildet ist. Mit dem Laderegler 16 verbunden ist weiterhin ein Kommunikationsmodul 18, welches ebenfalls innerhalb des Gehäuses 10 angeordnet ist. Weiterhin weist das Speicherheizgerät 4 einen Kerntemperaturfühler 20 auf, welcher zur Messung der aktuellen Temperatur des Speicherkerns 12 ausgebildet ist. Das entsprechende Messsignal wird insbesondere an den Laderegler 16 weitergegeben.

In das Speicherheizgerät 4 sind weiterhin üblicherweise in hier nicht näher dargestellter Weise ein Gebläse sowie gegebenenfalls noch ein zusätzlicher, dem Gebläse zugeordneter Heizstab integriert. Letzterer dient zur Direktbeheizung in dem Fall, wenn der Speicherkern 12 entleert ist und weiterhin ein Wärmebedarf für den Raum besteht.

Auf der Reglerplatine des Ladereglers 16 sind mehrere, im Ausführungsbeispiel drei, als Magnetrelais ausgebildete Schaltelemente 22 angeordnet. Jedes Schaltelement 22 dient dabei zum Zu- bzw. Abschalten einer jeweiligen Gruppe A,B,C.

Der Laderegler 16 ist an eine üblicherweise dreiphasige Versorgungsleitung 24 eines Hausstromnetzes angeschlossen. Über diese erfolgt eine Stromversorgung von extern, insbesondere von einem Energieversorgungsunternehmen 26. Alternativ kann auch eine lokale Energieerzeugungseinheit, wie beispielsweise eine dem Gebäude 9 zugeordnete Photovoltaikanlage Strom in das Hausnetz einspeisen, sodass elektrische Leistung über die Versorgungsleitung 24 bereitgestellt wird.

In der Figur ist ergänzend noch neben dem Heizschütz 8 ein Rundsteuerempfänger 28 dargestellt, wie er heutzutage eingesetzt wird. Über das Stromnetz gibt das Energieversorgungsunternehmen 26 ein entsprechendes Rundsteuersignal ab, welches von dem Rundsteuerempfänger empfangen und als ein erstes Freigabesignal F1 identifiziert wird. Liegt dieses vor, wird der Heizschütz 8 geschaltet, sodass die Versorgungsleitung 24 mit dem Versorgungsnetz verbunden ist und elektrische Leistung für das Speicherheizgerät 4 zur Verfügung gestellt wird.

Auf den Rundsteuerempfänger 28 sowie den Heizschütz 8 ist alternativ verzichtet, wenn beispielsweise die Informationsübermittlung zwischen Energieversorgungsunternehmen 26 und dem lokalen Verbraucher, nämlich der Elektrospeicherheizanlage 2 digital beispielsweise über andere Kommunikationswege wie z.B. das Internet, erfolgt. Bei diesem Übertragungsweg steht beispielsweise die Zentraleinheit 6 über das Internet 30 mit dem Energieversorgungsunternehmen 26 in Kommunikationsverbindung.

Bei dem in der Figur dargestellten Ausführungsbeispiel ist in die Zentraleinheit 6 eine Berechnungseinheit 32 integriert, welche den Soll-Ladegrad L_{S} ermittelt und an den Laderegler 16 über das Kommunikationsmodul 18 weitergibt.

Zur Ermittlung des Soll-Ladegrads L_{S} ist in der Berechnungseinheit 32 ein geeigneter Algorithmus hinterlegt. Dieser berücksichtigt insbesondere Temperaturmesswerte, speziell von einem Außentemperaturfühler 34, und ergänzend beispielsweise auch von einem Raumtemperaturfühler und/oder einem Innentemperaturfühler, welcher beispielsweise innerhalb der Zentraleinheit 6 integriert ist.

Von besonderer Bedeutung für die Ermittlung des Soll-Ladegrads L_{S} ist in bevorzugter Ausgestaltung, dass für dessen Bestimmung auch prognostizierte Wetterdaten, insbesondere prognostizierte Temperaturdaten, herangezogen werden. Diese werden dabei vorzugsweise von einem Wetterdienst 36 abgerufen. Auch hierzu steht die Zentraleinheit 6 vorzugsweise über das Internet 30 mit dem Wetterdienst in Kommunikationsverbindung.

Anhand der erhaltenen Prognosedaten ermittelt dann die Berechnungseinheit 32 den Soll-Ladegrad L_{S}. Hierzu wird insbesondere der Mittelwert der Prognosedaten für ein vorgesehenes Zeitfenster, insbesondere von 24 Stunden, ermittelt. Dieser prognostizierte Mittelwert wird ergänzend noch korrigiert mit einem aktuellen Temperaturwert, welcher beispielsweise ebenfalls aktuell vom Wetterdienst 36 erhalten wird oder vorzugsweise unmittelbar über den Außentemperaturfühler 34 gemessen wird. Der prognostizierte Mittelwert sowie der aktuelle Temperaturwert werden dann mit vorgegebener Gewichtung, beispielsweise 1:1 berücksichtigt und für die Ermittlung des Soll-Ladegrads L_{S} herangezogen.

Die Bestimmung des Soll-Ladegrads erfolgt dabei beispielsweise nach dem gleichen oder einem ähnlichen Algorithmus wie bisher auch bei der Verwendung von historischen Temperaturdaten, mit der Maßgabe, dass nunmehr anstelle der historischen Daten die Prognosedaten kombiniert mit den aktuellen Daten herangezogen werden.

Allgemein wird hierbei derart vorgegangen, dass der Soll-Ladegrad L_{S} in definierten Zeitabständen von beispielsweise mehreren Minuten, insbesondere stündlich auf die eben beschriebene Weise ermittelt und diskontinuierlich, also im Rhythmus von beispielsweise mehreren Minuten oder einer Stunde an den Laderegler 16 übermittelt wird.

Dieser so ermittelte Soll-Ladegrad L_{S} wird wie bereits erwähnt an den Laderegler 16 übermittelt. Sofern der aktuelle Ladegrad geringer als der Soll-Ladegrad L_{S} ist, also beispielsweise unterhalb einer dem Soll-Ladegrad L_{S} zugeordneten Temperatur des Speicherkerns 12, so ergeht ein zweites Freigabesignal F2. Darauf werden die Schaltelemente 22 oder zumindest eines hiervon geschlossen, um die jeweilige Gruppe A,B,C zum Beladen des Speicherkerns 12 mit Wärme zuzuschalten.

Je nach Ausführungsvariante wird das zweite Freigabesignal F2 beispielsweise direkt von der Zentraleinheit 6 vorgegeben, beispielsweise indem ein Soll-Ladegrad übermittelt wird, sobald der aktuelle Ladegrad unterschritten wird. Für diese Ausführungsvariante ist hierbei erforderlich, dass das Kommunikationsmodul 18 Informationen über den aktuellen Ladegrad an die Zentraleinheit 6 übermittelt.

Alternativ besteht auch die Möglichkeit, dass dieser Vergleich zwischen Soll- und Ist-Ladegrad innerhalb des Ladereglers 16 vorgenommen wird. Maßgebend für die Bestimmung des Ist-Ladegrads ist jeweils die aktuelle Temperatur des Speicherkerns 12.

Sobald sowohl das zweite Freigabesignal F2 als auch das erste Freigabesignal F1 vorliegen sind die Heizelemente 8 an das Stromnetz angeschlossen und beheizen den Speicherkern 12.

Im Hinblick auf eine effiziente Ausnutzung von regenerativ erzeugter Energie, insbesondere wenn aktuell lediglich eine begrenzte Menge zur Verfügung steht und/oder allgemein aktuell eine hohe Netzauslastung vorliegt, ist eine intelligente Ansteuerlogik der einzelnen Heizstäbe 14 vorgesehen. Die Ansteuerung erfolgt dabei in einem speziellen Betriebsmodus allgemein derart, dass die Heizstäbe 14 mit einer elektrischen Leistung versorgt werden, die unterhalb der Gesamtheizleistung der Heizstäbe 14 liegt.

In der hier beschriebenen bevorzugten Ausführungsvariante erfolgt dies durch ein alternierendes Zuschalten von unterschiedlichen Heizgruppen A,B,C. Zweckdienlicherweise werden hierzu die einzelnen Heizgruppen A,B,C jeweils für ein definiertes Zeitfenster beispielsweise von mehreren 10 Minuten (10, 20, 30 Minuten) zugeschalten bzw. abgeschalten. Je nach zur Verfügung stehender elektrischer Leistung sind parallel eine, zwei oder auch drei Gruppen zugeschaltet.

Die Heizleistung der einzelnen Gruppen A,B,C ist vorzugsweise identisch. Sie kann sich jedoch auch unterscheiden, um die aufgenommene Leistung möglichst exakt an die zur Verfügung stehende Leistung anzupassen.

Durch das zeitversetzte Zuschalten der unterschiedlichen Gruppen A,B,C ist insgesamt gewährleistet, dass der Speicherkern 12 gleichmäßig mit Wärme beladen wird. Eine ungleichmäßige Beladung würde unter Umständen dazu führen, dass der Kerntemperaturfühler 20 falsche Messwerte bezüglich des aktuellen Beladungsgrads liefert, da er an einer im Mittel gesehen kälteren bzw. heißeren Stelle angeordnet ist.

Im Ausführungsbeispiel sind vorliegend also drei Heizgruppen A,B,C verwendet, die vorzugsweise jeweils von ein oder auch von zwei oder drei Heizstäben 14 gebildet sind. Jedes Magnetrelais 22 schaltet dabei eine Gruppe A,B,C, vorzugsweise einen Heizstab. Jede Gruppe A,B,C bzw. jeder Heizstab ist daher an einer Phase des Stromversorgungsnetzes angeschlossen.

Zur gleichmäßigen Aufladung ist im Aufladeregler 16 ein Softwaremodul integriert, welches die Aufteilung der zur Verfügung stehenden Leistung auf die verschiedenen Gruppen A,B,C und damit Laststufen bewirkt. Die einzelnen Heizstäbe 14 werden dabei beispielsweise für 20 Minuten abwechselnd betrieben. Alternativ hierzu erfolgt eine gleichmäßige Aufteilung der Leistung auf alle Heizstäbe14 durch ein elektrisches Schaltgerät, beispielsweise Triac.

Die Beladung erfolgt insbesondere ausschließlich im Rahmen einer Vorwärtssteuerung. So wird üblicherweise ein Zeitraum beispielsweise von 22h bis 6h von dem Energieversorgungsunternehmen 26 vorgegeben, in dem das erste Freigabesignal F1 beispielsweise für einen Niedrigstromtarif anliegt. Die Beladung erfolgt unmittelbar zu Beginn dieses Zeitraums, um zeitnah bei zur Verfügung stehender regenerativer Energie (Wind, Fotovoltaik) den Ladevorgang durchführen zu können.

Hervorzuheben ist auch das Kommunikationsmodul 18, welches insbesondere über eine serielle Schnittstelle mit dem Laderegler 16 verbunden ist. Zum einen erfolgt hierüber die Sollvorgabe des Ladegrads L_{S} und zudem kann der Aufladeregler seine Betriebszustände nach außen geben.

Ergänzend umfasst der Laderegler 16 vorzugsweise eine insbesondere RS485-Schnittstelle, über die der Aufladeregler 16 optional beispielsweise über eine externe Gebäudeautomatisation ansteuerbar ist. Alternativ steht diese Schnittstelle auch für Servicezwecke zur Verfügung. Bei einer solchen alternativen Ausgestaltung entfallen vorzugsweise die Zentraleinheit 6 sowie das Kommunikationsmodul 18.

In dem Speicherheizgerät 4 ist üblicherweise - wie bereits erwähnt - noch ein Lüfter oder eine Zusatzheizung integriert. Diese ist gebildet durch einen zusätzlichen Heizstab in einem Ausblasraum des Speicherheizgeräts 4. Zweckdienlicherweise werden diese Zusatzkomponenten über die Zentraleinheit 6 angesteuert. Hierzu wird ein entsprechendes Signal an das Kommunikationsmodul 18 übermittelt, welches dann Signale beispielsweise an die Steuerungs-Klemmleiste, den Lüfter oder die Zusatzheizung übermittelt.

### Bezugszeichen

- 2: Elektrospeicherheizanlage
- 4: Speicherheizgerät
- 6: Zentraleinheit
- 8: Heizschütz
- 9: Gebäude
- 10: Gehäuse
- 12: Speicherkern
- 14: Heizstab
- 16: Laderegler
- 18: Kommunikationsmodul
- 20: Kerntemperaturfühler
- 22: Schaltelement
- 24: Versorgungsleitung
- 26: Energieversorgungsunternehmen
- 28: Rundsteuerempfänger
- 30: Internet
- 32: Berechnungseinheit
- 34: Außentemperaturfühler
- 36: Wetterdienst

- A,B,C: Gruppe
- F1: Erstes Freigabesignal
- F2: Zweites Freigabesignal
- L_{S}: Soll-Ladegrad

## Patentansprüche

1. Elektrospeicherheizanlage (2) mit
- einem in einem Gehäuse (10) angeordneten Speicherkern (12) und elektrischen Heizstäben (14) zum Aufladen des Speicherkerns, wobei die Heizstäbe (14) in Gruppen (A,B,C) angeordnet sind
- einem Laderegler (16) zum Aufladen des Speicherkerns (12), wobei der Laderegler (16) durch eine Reglerplatine gebildet ist,
- mit einer Berechnungseinheit (32), die derart ausgebildet ist, dass ein Soll-Ladegrad (L_{S}) für den Speicherkern (12) ermittelt und dem Laderegler (16) zur Verfügung gestellt wird
- mit mehreren Schaltelementen (22) zum Freischalten eines Ladestroms, wobei über die Schaltelemente (22) die einzelnen Gruppen (A,B,C) der Heizstäbe (14) unabhängig voneinander zuschaltbar sind und die Schaltelemente (22) insbesondere auf der Reglerplatine integriert sind.

2. Elektrospeicherheizanlage (2) nach dem vorhergehenden Anspruch, wobei es sich bei den Schaltelementen (22) jeweils um ein Magnetrelais handelt.

3. Elektrospeicherheizanlage (2) nach einem der beiden vorhergehenden Ansprüche, wobei eine Ansteuerlogik für eine zeitversetzte Zu- und Abschaltung der einzelnen Heizstab-Gruppen (A,B,C) ausgebildet ist, derart, dass die einzelnen Heizstab-Gruppen (A,B,C) abwechselnd zugeschaltet werden, sodass ein gleichmäßiges Beladen des Speicherkerns (12) erfolgt.

4. Elektrospeicherheizanlage (2) nach einem der drei vorhergehenden Ansprüche, wobei ein elektronischer Leistungsteiler, insbesondere ein Triac zur Aufteilung einer zur Verfügung stehenden elektrischen Leistung auf die Heizstab-Gruppen (A,B,C) derart ausgebildet ist, dass im Falle, wenn die zur Verfügung stehende elektrische Leistung geringer als die Gesamt-Heizleistung aller Heizstab-Gruppen (A,B,C) ist, die zur Verfügung stehende elektrische Leistung auf die Heizstab-Gruppen (A,B,C) für ein gleichmäßiges Beladen des Speicherkerns (12) verteilt wird.

5. Elektrospeicherheizanlage (2) nach einem der vorhergehenden Ansprüche, wobei ein Kommunikationsmodul (18) mit dem Laderegler (16) verbunden ist, über das im Betrieb eine vorzugsweise bidirektionale Kommunikation mit einer außerhalb des Gehäuses (10) angeordnete Zentraleinheit (6) erfolgt, wobei die Zentraleinheit (6) wahlweise und insbesondere in Kombination
- mit dem Internet (30) verbunden ist, insbesondere zum Empfang von Wetterprognosedaten,
- mit einem Energieversorger (26) insbesondere bidirektional verbunden ist, speziell zum Empfangen von Steuersignalen oder Informationen des Energieversorgers (26) über Stromverfügbarkeit und/oder zum Übermitteln von Informationen, speziell bezüglich der aktuellen Speicherkapazität oder des aktuellen Speicherbedarfs der Elektrospeicherheizanlage (2),
- Temperatursignale beispielsweise von einem Außentemperaturfühler (34), einem Raumtemperaturfühler, einem Kerntemperaturfühler (20) und/oder einem in der Zentraleinheit (6) integrierten Temperaturfühler auswertet.

6. Elektrospeicherheizanlage (2) nach einem der vorhergehenden Ansprüche, wobei der Laderegler (16) über das Kommunikationsmodul (18) die Vorgabe für den Soll-Ladegrad (L_{S}) des Speicherkerns (12) von der Zentraleinheit (6) erhält, die als die Berechnungseinheit (32) zur Vorgabe des Soll-Ladegrades (L_{S}) ausgebildet ist.

7. Elektrospeicherheizanlage (2) nach einem der vorhergehenden Ansprüche, bei der der Ladevorgang ausschließlich entsprechend einer sogenannten Vorwärtsregelung geregelt wird, insbesondere sobald regenerativ erzeugte Energie vorliegt.

8. Elektrospeicherheizanlage (2) insbesondere nach einem der vorhergehenden Ansprüche mit
- einem in einem Gehäuse (10) angeordneten Speicherkern (12) und elektrischen Heizstäben (14) zum Aufladen des Speicherkerns (12),
- mit einem Laderegler (16) zum Aufladen des Speicherkerns (12)
- einer Berechnungseinheit (32), die derart ausgebildet ist, dass ein Soll-Ladegrad (L_{S}) für den Speicherkern (12) für einen kommenden Heiztag ermittelt und dem Laderegler (16) zur Verfügung gestellt wird, wobei für die Ermittlung des Soll-Ladegrades (L_{S}) eine Wetterprognose mit prognostizierten Wetterdaten für den kommenden Heiztag berücksichtigt wird.

9. Elektrospeicherheizanlage (2) nach dem vorhergehenden Anspruch, die ein Kommunikationsmodul (18) umfasst, über das die Berechnungseinheit (32) zumindest temporär mit einem Wetterdienst eine Kommunikationsverbindung aufbaut, insbesondere über das Internet (30), zum Erhalt der Wetterprognose für den kommenden Heiztag, wobei für die Ermittlung des Soll-Ladegrades (L_{S}) vorzugsweise zeitaufgelöste Wetterdaten für den kommenden Heiztag verwendet werden.

10. Elektrospeicherheizanlage (2) nach einem der vorhergehenden Ansprüche, die derart ausgebildet ist, dass aus den prognostizierten Wetterdaten ein Mittelwert gebildet wird, welcher zur Ermittlung des Soll-Ladegrades (L_{S}) herangezogen wird.

11. Elektrospeicherheizanlage (2) nach einem der vorhergehenden Ansprüche, wobei fortlaufend ein Soll-Ladegrad (L_{S}) auf Basis der für ein vorgegebenes Zeitfenster, insbesondere 24h, prognostizierten Wetterdaten bestimmt und dem Laderegler (16) übermittelt wird.

12. Elektrospeicherheizanlage (2) nach einem der vorhergehenden Ansprüche, die derart ausgebildet ist, dass für die Ermittlung des Soll-Ladegrades (L_{S}) ausschließlich die prognostizierten Wetterdaten sowie aktuelle Wetterdaten berücksichtigt werden und die prognostizierten Wetterdaten mit einer vorgegebenen Gewichtung, insbesondere 35 bis 100%, in die Ermittlung des Soll-Ladegrads (L_{S}) einfließt, wobei als aktuelle Wetterdaten insbesondere aktuelle Werte eines Außentemperaturfühlers (34) herangezogen werden.

13. Elektrospeicherheizanlage (2) nach einem der vorhergehenden Ansprüche, die derart ausgebildet ist, dass zur Ermittlung des Soll-Ladegrades (L_{S}) wahlweise oder in Kombination eine prognostizierte Außentemperatur, ein prognostizierter Sonnenschein oder eine prognostizierte Windgeschwindigkeit herangezogen wird.

14. Elektrospeicherheizanlage (2) nach einem der vorhergehenden Ansprüche, die derart ausgebildet ist, dass die prognostizierten Wetterdaten um eine ortsspezifische Korrektur für den Aufstellort des Speicherheizgeräts (4) korrigiert werden.

15. Elektrospeicherheizanlage (2) nach dem vorhergehenden Anspruch, wobei für die ortsspezifische Korrektur wahlweise oder in Kombination
- eine aktuelle Wetterinformation berücksichtigt wird,
- ein Messwert eines Außentemperaturfühlers (34) ausgewertet wird,
- dass systematische lokale Abweichungen von den prognostizierten Wetterdaten berücksichtigt werden,
- ein selbstlernendes System verwendet ist, wobei hierzu insbesondere die prognostizierten Wetterdaten abgespeichert und mit den am Heiztag tatsächlichen Wetterdaten verglichen werden und für die ortsspezifische Korrektur herangezogen werden
- eine von einer Wetterstation (36) insbesondere über das Internet (30) erhaltene aktuelle Wetterinformation mit einer lokalen aktuellen Wetterinformation verglichen wird.
